# EUROPÄISCHE PATENTSCHRIFT

(11) **EP 2 694 816 B1**
(45) Veröffentlichungstag und Bekanntmachung des Hinweises auf die Patenterteilung: **21.01.2015**
(21) Anmeldenummer: 12714958.1
(22) Anmeldetag: 30.03.2012
(51) Int. Cl.: F04C 29/12, F16K 15/18

(54) **LUFTREGLER FÜR KOMPRESSOREN, INSBESONDERE SCHRAUBENKOMPRESSOREN**
AIR REGULATOR FOR COMPRESSORS, IN PARTICULAR SCREW COMPRESSORS
RÉGULATEUR D'AIR POUR COMPRESSEURS, EN PARTICULIER POUR COMPRESSEURS À VIS

(30) Priorität: 01.04.2011 DE 102011015805; 29.03.2012 DE 102012006363
(43) Veröffentlichungstag der Anmeldung: 12.02.2014
(73) Patentinhaber: Rotorcomp Verdichter GmbH, 82110 Germering (DE)
(72) Erfinder: STEPHAN, Enrico, 81375 München (DE)
(74) Vertreter: Hering, Hartmut
(86) Internationale Anmeldenummer: PCT/EP2012/001440
(87) Internationale Veröffentlichungsnummer: WO 2012/130473

(56) Entgegenhaltungen:
- WO-A1-2007/101901
- DE-A1- 3 210 790
- US-A1- 2004 151 602

## Beschreibung

Die Erfindung befasst sich mit einem Luftregler für Kompressoren, insbesondere Schraubenkompressoren, welche eine Ölabscheidereinrichtung mit einem Vorabscheider haben, und der Luftregler in einem Reglergehäuse ein federbeaufschlagtes und mittels einer Kolbenanordnung betätigbares Ventilelement aufweist.

Aus US 2004/0151602 A1 ist ein Luftregler für Kompressoren, der im Oberbegriff des Anspruchs 1 angegebenen Art bekannt. Ferner sind aus WO 2007/101901 A1 und DE 32 10 790 A1 einerseits ein Saugventil und andrerseits ein druckmittelbetätigtes, steuerbares Absperrventil für Kompressoren bekannt.

Es ist allgemein bekannt, dass sich Regler entweder derart auslegen lassen, dass sie im Grundzustand geöffnet sind oder im Grundzustand geschlossen sind. Regler, welche im Grundzustand geschlossen sind, werden insbesondere bei Schraubenkompressoren eingesetzt, um einen Schweranlauf vor allem bei Kälte zu vermeiden. Meist wird mit Hilfe eines solchen, im Grundzustand geschlossenen Reglers auch erst das Anlaufen oder Anlassen eines solchen Schraubenkompressors ermöglicht. Ein derartiger, im Grundzustand geschlossener Regler hat eine starke Vorspannfeder, welche den Regler beim Starten oder Entlasten in seiner Schließstellung hält. Infolge der hohen Federkräfte bei einem solchen Regler ergibt sich im Hinblick auf die Regelgüteund -geschwindigkeit ein ungünstiges Verhalten.

Die Erfindung zielt darauf ab, unter Überwindung der zuvor geschilderten Schwierigkeiten einen Luftregler für Kompressoren, insbesondere Schraubenkompressoren bereitzustellen, welcher wirksam einen Schweranlauf beim Schraubenkompressor verhindert, ein feinfühliges Reglerverhalten beim Kompressorbetrieb bereitstellt und dennoch einen konstruktiv möglichst einfachen und platzsparenden Aufbau hat.

Nach der Erfindung wird hierzu ein Luftregler für Kompressoren, insbesondere Schraubenkompressoren bereitgestellt, welche eine Ölabscheidereinrichtung mit einem Vorabscheider haben, und der Luftregler in einem Reglergehäuse ein einseitig federbeaufschlagtes und mittles einer Kolbenanordnung betätigbares Ventilelement aufweist, wobei mit dem Luftregler eine Steuereinrichtung wirkverbunden ist, welche einen Steuerkolben enthält, welcher Luftregler sich dadurch auszeichnet, dass der Steuerkolben abhängig vom Vorabscheiderdruck im Zusammenwirken mit einer Vorsteuereinrichtung das Ventilelement des Luftreglers derart betätigt, dass beim Anlassen des Kompressors der Luftregler sofort zwangsweise seine Schließstellung und im Grundzustand seine Offenstellung einnimmt.

Bei der erfindungsgemäßen Auslegung hat der Luftregler ein im Grundzustand offenes Grundverhalten, so dass keine großen Federkräfte benötigt werden, um der Luftregler beim Starten bzw. Anlassen in seiner Schließstellung zu halten. Dank der bei der Erfindung vorgesehenen Steuereinrichtung wird aber der Luftregler und dessen Ventilelement derart betätigt, dass beim Anlassen des Kompressors der Regler sofort zwangsweise seine Schließstellung einnimmt, so dass sich in wirksamer Weise ein Schweranlauf vermeiden lässt. Über eine vorzugsweise vorgesehene und in den Luftregler integrierte Umschleusungseinrichtung wird sofort nach dem Anlassen des Kompressors der Anlagendruck erreicht. Mit Hilfe der Vorsteuereinrichtung der Steuereinrichtung wird der vom Kompressor unmittelbar nach dem Starten des Kompressors erzeugte Vorabscheider-Druck oder der unmittelbare Auslaßdruck des Kompressors in effektiver Weise dazu genutzt, den Luftregler sofort in die Schließstellung zu bringen. Da bei der Erfindung sich starke Federkräfte wirksam vermeiden lassen, erhält man bei der Erfindung während des Kompressorbetriebs ein feinfühliges Regelverhalten mit verbesserter Regelgüte und -geschwindigkeit. Da bei der Erfindung der Luftregler in Grundstellung offen ist, aber mit Hilfe der Steuereinrichtung eine sofortige Schließung des Luftreglers ausgelöst wird, vereinigt der erfindungsgemäße Luftregler sowohl die Eigenschaft eines im Grundzustand offenen, als auch jene Eigenschaften eines im Grundzustand geschlossenen Luftreglers. Auch lässt sich eine Drucküberhöhung beim Übergang in den Leerlaufzustand eines Kompressors wirksam unterdrücken. In der Schließstellung des Reglers ist ein relativ niedriger Schließdruck ab 0,5 bar bis etwa 2,5 bar vorhanden, wodurch sich die Gesamtkonstruktion nach der Erfindung zusätzlich weiter vereinfacht.

Vorzugsweise wird der Luftregler nach der Erfindung pneumatisch oder elektrisch angesteuert, wobei natürlich gegebenenfalls auch eine hydraulische oder eine Kombination aus mehreren Ansteuerungsweisen verwirklicht sein kann. Durch diese universelle Ansteuerbarkeit des Luftreglers und der Steuereinrichtung kann der erfindungsgemäße Luftregler unter den unterschiedlichsten Einsatzbedingungen betrieben werden.

Vorzugsweise enthält die Steuereinrichtung ein Rückschlagventil im Leitungsweg zwischen dem Steuermedium und dem Vorabscheidermedium. Durch dieses Rückschlagventil lässt sich wirksam beim Beaufschlagen des Verdichters eine Entlastung des Druckraums verwirklichen.

Vorzugsweise umfasst die Vorsteuereinrichtung einen Ventilmagneten. Wenn der Ventilmagnet einen relativ großen Querschnitt hat, kann eine Trennung der Steuerleitung und der Kolbenanordnung zum Schließen des Ventilelements und einer gegebenenfalls vorgesehenen Entlastungsleitung entfallen. Hierdurch vereinfacht sich die Konstruktion eines solchen Luftreglers.

Vorzugsweise ist die Steuereinrichtung direkt am Reglergehäuse befestigt, so dass keine zusätzlichen Verbindungsleitungen verlegt werden müssen, die zu Undichtigkeiten und dergleichen führen können, sondern die Steuereinrichtung löst direkt die entsprechenden Schaltbewegung des Luftreglers aus.

Vorzugsweise ist die Auslegung eines Luftreglers derart getroffen, dass die Steuereinrichtung in kommunizierender Verbindung mit der Regler-Stellkolbenbeaufschlagungsanordnung und einer Entlastungseinrichtung steht. Somit sind bei der erfindungsgemäßen Auslegung des Luftreglers alle funktionswesentlichen Komponenten im Reglergehäuse oder in der am Reglergehäuse angebrachten Steuereinrichtung integriert.

Vorzugsweise umfasst der Luftregler eine Umschleusungseinrichtung, welche in den Regler selbst integriert ist. Mit dieser Umschleusungseinrichtung wird eine ständige Reinigung und Schmierung des Kompressors erreicht. Über eine vorzugsweise vorgesehene Umschleusungsdüse der Umschleusungseinrichtung, welche unmittelbar über eine Bohrung in den Ansaugraum des Kompressors mündet, entsteht ein ständiger Mediumkreislauf und es können sich keine Totbereiche bilden. Der Querschnitt der Umschleusungsdüse ist derart beschaffen und ausgelegt, dass der Beaufschlagungsdruck zum Schließen des Reglers durch den Kolben und der Umschleusung immer linear erfolgt.

Ein Aufschäumen und Überfluten des Ansaugbereichs wird dadurch vermieden, dass der Differenzdruck vom Vorabscheider immer größer als derjenige des Steuermediums ist und die Entlastung beim Luftregler von der Steuereinrichtung durch ein Rückschlagventil getrennt ist.

Zusammenfassend ist es bei dem Luftregler für Kompressoren, insbesondere Schraubenkompressor, nach der Erfindung wesentlich, dass der Luftregler eine Steuereinrichtung in Wirkverbindung derart besitzt, dass ein Steuerkolben, welcher vorzugsweise als ein Differenzdruckkolben ausgelegt ist, abhängig von einem Vorabscheidedruck und zusammenwirkend mit einer Vorsteuereinrichtung das Ventilelement des Luftreglers beim Anlassen des Kompressors sofort und zwangsweise in seine Schließstellung bringt. Im Grundzustand ist der Regler so ausgelegt, dass er in diesem Grundzustand seine Offenstellung einnimmt.

Insbesondere zeichnet sich die Erfindung durch eine in das Kompressorgehäuse integrierte Ausgestaltungsform des Luftreglers aus.

Die Erfindung wird nachstehend anhand einer bevorzugten, nicht beschränkenden Ausführungsform unter Bezugnahme auf die beigefügte Zeichnung näher erläutert.

Darin gilt:
- Fig. 1: zeigt in einer Schnittansicht einen Luftregler nach der Erfindung als Gesamtansicht, und
- Fig. 2: zeigt in einer Schnittansicht und in Einzelteildarstellung eine beim Luftregler nach der Erfindung vorgesehene Steuereinrichtung.
- Fig. 3: zeigt in einer Schnittansicht einen Luftregler nach der Erfindung mit einer Umschleusungseinrichtung.

In den Figuren der Zeichnung sind gleiche oder ähnliche Teile mit denselben Bezugszeichen versehen.

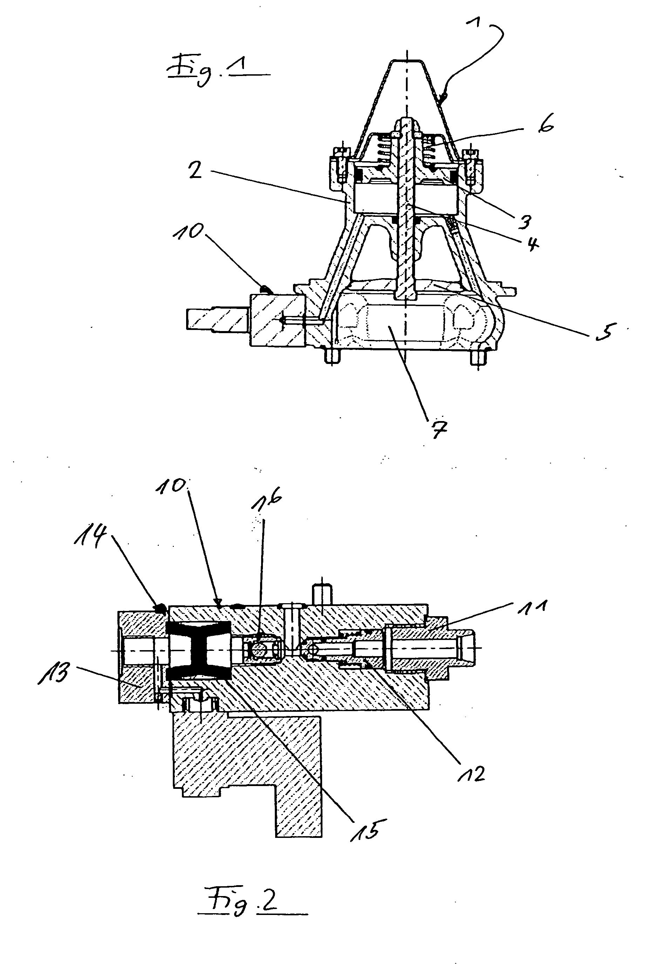

Unter Bezugnahme auf Fig. 1 ist dort ein Luftregler insgesamt mit dem Bezugszeichen 1 versehen. Der Luftregler 1 ist für einen nicht dargestellten Kompressor, insbesondere einen Schraubenkompressor bestimmt. Der Luftregler 1 hat ein Reglergehäuse 2, in welchem ein federbeaufschlagtes und mittels einer Kolbenanordnung 3 betätigbares Ventilelement 4 angeordnet ist. Das Ventilelement 4 trägt an einem Ende einen Ventilteller 5, welcher in der Schließstellung zur entsprechenden Sitzanlage an dem Reglergehäuse 2 kommt. Mit Hilfe der Kolbenanordnung 3 wird dann das Ventilelement 4 entgegen der Vorbelastungskraft einer Vorspannfeder 6 derart bewegt, dass der Ventilteller 5 von der in Fig. 1 gezeigten Sitzanlage von der Schließlage abgehoben wird. Am Reglergehäuse 2 ist eine mit 10 bezeichnete Steuereinrichtung insgesamt fest angebracht. Der Ansaugraum des nicht näher dargestellten Kompressors, wie eines Schraubenkompressors, ist in Fig. 1 mit 7 bezeichnet.

Aus Fig. 2 sind nähere Einzelheiten hinsichtlich der Auslegung der insgesamt mit 10 bezeichneten Steuereinrichtung gemäß einem bevorzugten Ausführungsbeispiel zu ersehen.

Die Steuereinrichtung 10 umfasst einen Anschluss 11, an welchem ein Vorabscheiderdruck oder ein Druck eines Ölvorabscheiders eines Öl-Abscheiders des Kompressors anliegt. Der Vorabscheiderdruck kann sich beispielsweise von 0 zum Anlagendruck von 1,5 bis 2,5 bar belaufen. Ferner umfasst die Steuereinrichtung 10 einen in der Steuereinrichtung 10 hin- und herbewegbaren Steuerkolben 12, welcher vorzugsweise von 0 bis ca. 2 bar als ein Differenzdruckkolben ausgelegt ist. Ferner umfasst die Steuereinrichtung10 einen Anschluss 13, welcher beispielsweise für Steuerluft einer insgesamt mit 14 bezeichneten Vorsteuereinrichtung bestimmt ist. Im Anschluss an den Anschluss 13 für Steuerluft ist ein Ventilmagnet 15 zur Vorsteuerung angeordnet. Der Ventilmagnet 15 hat einen relativ großen Querschnitt, so dass eine Trennung zwischen der zur Kolbenanordnung 3 führenden Steuerleitung und einer nicht näher dargestellten Entlastungsleitung entfallen kann, wodurch sich der Konstruktionsaufwand verringert.

Ferner umfasst die Steuereinrichtung 10 ein Rückschlagventil 16, welches zwischen dem Steuerkolben 12 und dem Ventilmagneten 15 der Vorsteuereinrichtung 14 angeordnet ist.

In dem anhand der Zeichnung dargestellten Ausführungsbeispiel ist der Luftregler 1 als in seinem Grundzustand offener Regler ausgelegt. Um beim Anlassen des Kompressors einen Schweranlauf zu vermeiden, bringt die Steuereinrichtung 10 mit Hilfe des dort anliegenden Vorabscheiderdrucks und des Steuerkolbens 12 den Luftregler 1 sofort und zwangsweise in seine Schließstellung, ohne dass man eine sehr starke Vorspannfeder benötigt. Hierdurch hat der erfindungsgemäße Luftregler 1 ein günstigeres Regelverhalten hinsichtlich der Regelgüte und der - geschwindigkeit. Im Kompressorbetrieb verwirklicht daher der Luftregler 1 ein feinfühliges Regelverhalten. Auch lässt sich eine Drucküberhöhung beim Übergang in den Leerlauf des Kompressors vermeiden. Der erfindungsgemäße Luftregler 1 ermöglicht durch die sofortige Schließung des Ansaugreglers 1 beim Starten ein sanftes Anlaufen des Kompressors.

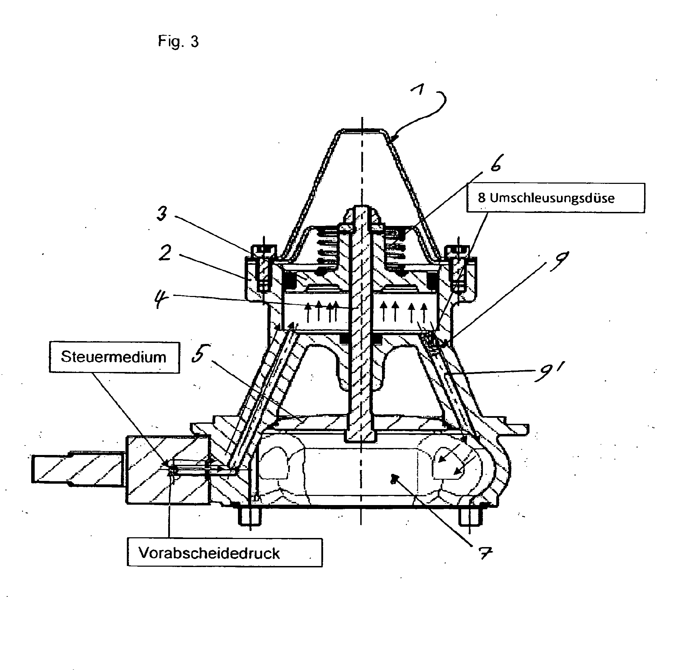

Unter Bezugnahme auf Figur 3 sind weitere Einzelheiten einer bevorzugten Ausführungsform eines Luftreglers 1 nach der Erfindung gezeigt. Bei diesem Luftregler 1 ist eine Umschleusungseinrichtung 9 in den Regler 1 integriert. Die insgesamt mit 9 bezeichnete Umschleusungseinrichtung stellt eine Verbindung von Steuermedium und Vorabscheidedruck bei ständigem Kreislauf über eine Umschleusungsdüse 8 bereit, welche unmittelbar über eine Bohrung 9' in den Ansaugraum 7 des Kompressors mündet. Diese Umschleusungseinrichtung 9 ist nicht wie an sich üblich extern zum Luftregler vorgesehen, sondern direkt in den Luftregler 1 und das Reglergehäuse 2 integriert, um einen möglichst kompakten Aufbau eines Luftreglers 1 zu erzielen. Der Querschnitt der Umschleusungsdüse 8 ist hierbei derart beschaffen und gewählt, dass der Beaufschlagungsdruck zum Schließen des Luftreglers 1 durch die Kolbenanordnung 3 und die Umschleusungseinrichtung 9 immer linear erfolgt. Durch die Integration der Umschleusungseinrichtung 9 in den Luftregler 1 und in das Reglergehäuse 2 desselben lassen sich auch zusätzliche extern zu verlegende Leitungen vermeiden, welche ggfs. Undichtigkeiten verursachen können.

Der ständige Mediumkreislauf über die Umschleusungseinrichtung 9 ermöglichst eine ständige Reinigung und Schmierung des Kompressors.

### Bezugszeichenliste

- 1: Luftregler insgesamt
- 2: Reglergehäuse
- 3: Kolbenanordnung
- 4: Ventilelement
- 5: Ventilteller
- 6: Vorspannfeder
- 7: Ansaugraum
- 8: Umschleusungsdüse
- 9: Umschleusungseinrichtung insgesamt
- 9': Bohrung
- 10: Steuereinrichtung insgesamt
- 11: Anschluss für Vorabscheiderdruck
- 12: Steuerkolben (Differenzdruckkolben)
- 13: Anschluss für Steuerluft bzw. Steuermedium
- 14: Vorsteuereinrichtung insgesamt
- 15: Ventilmagnet
- 16: Rückschlagventil

## Patentansprüche

1. Luftregler für Kompressoren, insbesondere Schraubenkompressoren, welche eine Ölabscheidereinrichtung mit Vorabscheider haben, und der Luftregler (1) in einem Reglergehäuse (2) ein einseitig federbeaufschlagtes und mittels einer Kolbenanordnung (3) betätigbares Ventilelement (4) aufweist, wobei mit dem Luftregler (1) eine Steuereinrichtung (10) wirkverbunden ist, welche einen Steuerkolben (12) enthält,
**dadurch gekennzeichnet, dass** der Steuerkolben (12) abhängig vom Vorabscheiderdruck im Zusammenwirken mit einer Vorsteuereinrichtung (14) das Ventilelement (4) des Luftreglers (1) derart betätigt, dass beim Anlassen des Verdichters der Luftegler (1) sofort zwangsweise seine Schließstellung einnimmt, während er im Grundzustand eine Offenstellung einnimmt.

2. Luftregler nach Anspruch 1, **dadurch gekennzeichnet, dass** der Luftregler (1) pneumatisch oder elektrisch oder auch in kombinierter Weise angesteuert wird.

3. Luftregler nach Anspruch 1 oder 2, **dadurch gekennzeichnet, dass** bei pneumatischer Ansteuerung die Steuereinrichtung (10) ein Rückschlagventil (16) zwischen dem Steuermedium und dem Vorabscheidermedium enthält.

4. Luftregler nach einem der vorangehenden Ansprüche, **dadurch gekennzeichnet, dass** die Vorsteuereinrichtung (14) einen Ventilmagneten (15), umfasst.

5. Luftregler nach einem der vorangehenden Ansprüche, **dadurch gekennzeichnet, dass** die Steuereinrichtung (10) direkt am Reglergehäuse (2) befestigt ist.

6. Luftregler nach einem der vorangehenden Ansprüche, **dadurch gekennzeichnet, dass** die Steuereinrichtung (10) in kommunizierender Verbindung mit der Kolbenanordnung (3) zur Beaufschlagung des Ventilelements (4) und einer Entlastungseinrichtung steht.

7. Luftregler nach einem der vorangehenden Ansprüche, **dadurch gekennzeichnet, dass** eine Umschleusungseinrichtung (9) in dem Regler (1) integriert ist.

8. Luftregler nach Anspruch 7, **dadurch gekennzeichnet, dass** die Umschleusungseinrichtung (9) eine im Reglergehäuse (2) ausgebildete Umschleusungsdüse (8) umfasst, welche unmittelbar über eine Bohrung (9') in den Ansaugraum (7) mündet.

9. Luftregler nach einem der vorangehenden Ansprüche, **dadurch gekennzeichnet, dass** er in das Kompressorgehäuse integriert ist.

## Claims

1. Air regulator for compressors, in particular for screw compressors, of the type comprising an oil separator device having a pre-separator, whereby the air regulator (1) is arranged in a regulator housing (2) and has a valve element (4), which is spring-loaded on one side and can be actuated by means of a piston arrangement (3), whereby a control device (10) is connected to the air regulator (1) and comprises a control piston (12),
**characterised in that** the control piston (12), depending on the pre-separator pressure, actuates the valve element (4) of the air regulator (1) in such a way that when starting the compressor the air regulator (1) immediately and forcibly assumes its closed position from its basic open position.

2. Air regulator according to Claim 1 above **characterised in that** the air regulator (1) is controlled either pneumatically or electrically or in a combined manner.

3. Air regulator according to Claim 1 or 2 above **characterised in that** if it is controlled pneumatically the control device (10) comprises a check valve between the control medium and the pre-separator medium.

4. Air regulator according to any of the above Claims **characterised in that** the precontrol device (14) comprises a valve magnet (15).

5. Air regulator according to any of the above Claims **characterised in that** the control device (10) is directly mounted on the regulator housing (2).

6. Air regulator according to any of the above Claims **characterised in that** the control device (10) is in communicating connection with the piston arrangement (3) so as to actuate the valve element (4) and a pressure relieving device.

7. Air regulator according to any of the above Claims **characterised in that** a sluicing device (9) is integrated in the regulator (1).

8. Air regulator according to Claim 7 above **characterised in that** the sluicing device (9) comprises a sluicing jet arranged in the regulator housing (2), which opens out through a bore (9') into the suction chamber (7).

9. Air regulator according to any of the above Claims above **characterised in that** it is integrated into the compressor housing.

## Revendications

1. Régulateur d'air pour compresseurs, en particulier pour compresseurs à vis qui présentent un séparateur d'huile doté d'un pré-séparateur. Le régulateur d'air (1) présente dans un boîtier de régulateur (2) un élément de soupape (4) soumis sur un côté à l'effet d'un ressort et pouvant être actionné au moyen d'un ensemble piston (3), un dispositif de commande (10) contenant un piston de commande (12) étant relié au régulateur d'air (1) de façon à coopérer avec celui-ci,
**caractérisé en ce que** le piston de commande (12) actionne l'élément de soupape (4) du régulateur d'air (1) en fonction de la pression du pré-séparateur en coopération avec un dispositif de commande préalable (14) de sorte qu'à la mise en marche du compresseur, le régulateur (1) occupe immédiatement et obligatoirement sa position de fermeture, tandis qu'il occupe une position d'ouverture dans l'état de base.

2. Régulateur d'air suivant la revendication 1, **caractérisé en ce que** le régulateur d'air est piloté pneumatiquement ou électriquement ou aussi de façon combinée.

3. Régulateur d'air suivant la revendication 1, **caractérisé en ce que** en pilotage pneumatique, le dispositif de commande (10) contient une valve anti-retour (16) entre le fluide de commande et le fluide du pré-séparateur.

4. Régulateur d'air suivant une des revendications précédentes, **caractérisé en ce que** le dispositif de commande préalable (14) comprend un aimant de valve (15).

5. Régulateur d'air suivant une des revendications précédentes, **caractérisé en ce que** le dispositif de commande (10) est fixé directement sur le boîtier du régulateur (2).

6. Régulateur d'air suivant une des revendications précédentes, **caractérisé en ce que** le dispositif de commande (10) est relié au système de piston (3) de façon à communiquer avec celui-ci pour la sollicitation de l'élément de valve (4) et d'un dispositif de délestage.

7. Régulateur d'air suivant une des revendications précédentes, **caractérisé en ce qu**'un dispositif de contournement (9) est intégré dans le régulateur (1).

8. Régulateur d'air suivant la revendication 7, **caractérisé en ce que** le dispositif de contournement (9) comprend une buse de contournement (9) qui est conçue dans le boîtier de régulateur (2) et débouche via un alésage (9) directement dans la chambre d'aspiration (7).

9. Régulateur d'air suivant une des revendications précédentes, **caractérisé en ce qu**'il est intégré dans le boîtier du compresseur.
